# EUROPEAN PATENT APPLICATION

(11) **EP 1 367 694 A1**
(43) Date of publication of application: **03.12.2003**
(21) Application number: 02011836.0
(22) Date of filing: 28.05.2002
(51) Int. Cl.: H02K 5/22

(54) **Terminal for vehicle alternator**

(71) Applicant: Valeo Mando Electrical Systems Korea Limited, Kyongju-si, Kyongsangbuk-do 780-130 (KR)
(72) Inventor: Seo, Dong-Won, Kyongsangbuk-do 780-140 (KR); Lee, Hyun-Cheol, Daegu-si 701-014 (KR); Choi, Kyung-Sik, Kyongsangbuk-do 780-130 (KR); Bang, Hyung-Tae, Kyongsangbuk-do 780-140 (KR); Kim, Byung-Tae, Kyongsangbuk-do 780-140 (KR)
(74) Representative: TER MEER STEINMEISTER & PARTNER GbR

(57) **Abstract**

The present invention relates to a terminal for a vehicle alternator, and in particular to a terminal for a vehicle alternator which is capable of decreasing an assembling space and stably providing an electric power from an alternator to a vehicle in such a manner that a terminal is protruded in a circumferential direction of a rear bracket when assembling a terminal. In a vehicle alternator including a housing which supports bearings for a rotation of a shaft, and a rectifier is installed in the housing, a heat sink is installed in the housing for radiating heat generated in the rectifier, and a part of the heat sink is protruded to the outside of the housing, so that the protruded portion of the heat sink is directly contacted with a radial shape output terminal in a terminal for a vehicle alternator.

## Description

### BACKGROUND OF THE INVENTION

### 1. Field of the Invention

The present invention relates to a terminal for a vehicle alternator, and in particular to a terminal for a vehicle alternator which is capable of decreasing an assembling space and stably providing an electric power from an alternator to a vehicle in such a manner that a terminal is protruded in a circumferential direction of a rear bracket when assembling a terminal.

### 2. Description of the Background Art

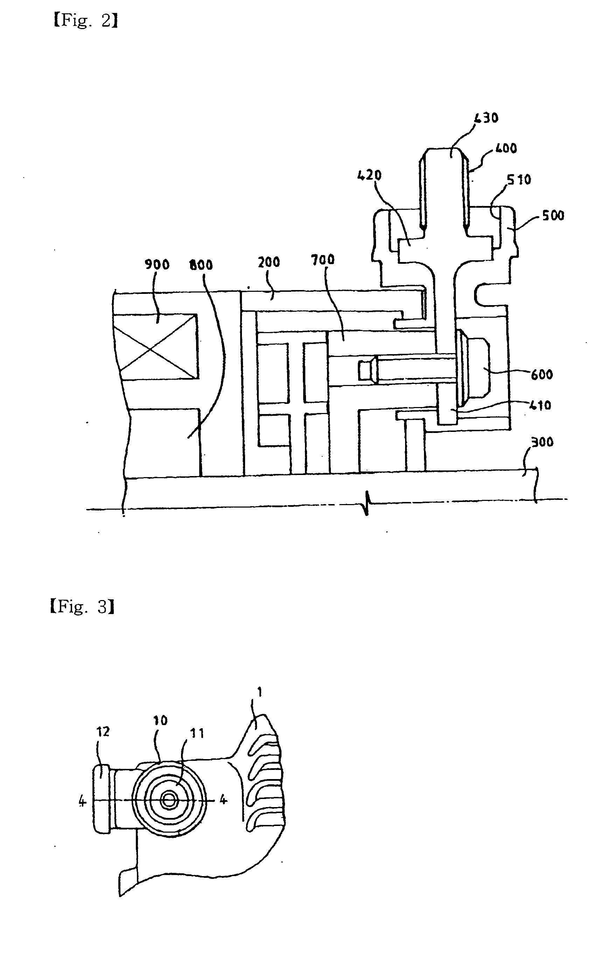

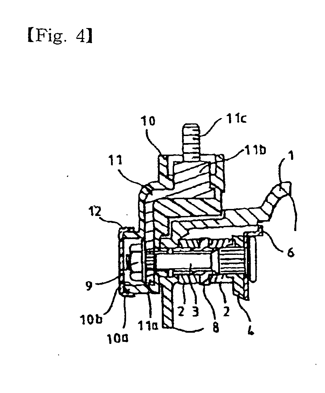

As shown in Figures 3 and 4, in a conventional alternator, a rectifier is installed in a housing 1 which supports bearings installed for a rotation of a shaft of an alternator. A heat sink 2, a board 4 and a plate 6 are installed closely each other in the rectifier. An axial direction output terminal member 3 is protruded in a lateral direction of the rear bracket 1 based on an intervention of an insulator 8 inserted into the heat sink 2. A radial shape output terminal member 11 surrounded by a certain shaped insulation layer member 10 is engaged using a nut 9 for thereby being electrically connected with the axial direction output terminal member 3.

In the conventional art, an inner end portion 11 a of the radial shape output terminal member 11 surrounded by the insulation layer member 10 is engaged by the nut 9 in such a manner that the inner end portion 11a of the same is inserted into the axial direction output terminal member 3. In addition, a cap 12 is inserted to surround a circular protrusion 10a in such a manner that the cap 12 surrounds an inner end portion 11 a of the radial shape output terminal member 11, and a nut 9 is engaged through an opening 9 of the circular protrusion 10a. A male screw portion 11c is protruded from a seat 11b of the radial shape output terminal member 11 to the upper portion.

Therefore, when an electric power is supplied to the male screw portion 11c of the radial shape output terminal member 11 and is supplied to the inner elements through the axial output terminal member 3, the thusly supplied electric power is insulated by the insulation layer member 10 and the insulator 8, so that a short circuit is prevented with respect to the rear bracket 1.

In the conventional art, the axial direction output terminal member connected with the heat sink is connected with the radial shape output terminal of the outer portion of the housing. However, the connected portion is separated from the heat sink by the housing. Therefore, in the case that the capacity of the power generation is high, the axial direction terminal member may be over-heated. Therefore, an electric connection error may occur in the connected portions of the elements due to the above over-heating. Since the connected portion is small, the electrically connected elements may be disconnected by a vibration or external impact when the vehicle operates. An error may occur in the power charge of a battery due to the above disconnection, and a spark may occur in the connected elements for thereby causing a fire in the vehicle.

### SUMMARY OF THE INVENTION

Accordingly, it is an object of the present invention to provide a terminal for a vehicle alternator which overcomes the problems encountered in the conventional art.

It is another object of the present invention to provide a terminal for a vehicle alternator which is capable of decreasing an assembling space, increasing a contact area with a heat sink in such a manner that a radial shape output terminal, which is formed in a straight line shape in general, is directly contacted with and fixed to a heat sink in a state that a radial shape output terminal is surrounded by an insulation member in a vertical direction with respect to an axial direction in a lateral side of a rear bracket, and a terminal is protruded in a circumferential direction of a rear bracket when assembling the terminal, so that an over heating and contact error which may occur due to a decrease of a contact area are prevented for thereby implementing a stable power supply to a vehicle.

In order to achieve the above objects, there is provided a terminal for a vehicle alternator in which a heat sink is installed in the housing for radiating heat generated in the rectifier, and a part of the heat sink is protruded to the outside of the housing, so that the protruded portion of the heat sink is directly contacted with a radial shape output terminal in the vehicle alternator including a housing which supports bearings for a rotation of a shaft, and a rectifier is installed in the housing.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating the construction of a vehicle alternator according to the present invention;
Figure 2 is a partial cross-sectional view illustrating a terminal structure according to the present invention;
Figure 3 is a schematic view illustrating a terminal of a conventional vehicle alternator; and
Figure 4 is a cross-sectional view taken along line 4 - 4 of Figure 3.

### DETAILED DESCRIPTION OF THE PREFERRED EMBODIMENTS

The preferred embodiments of the present invention will be described with reference to the accompanying drawings.

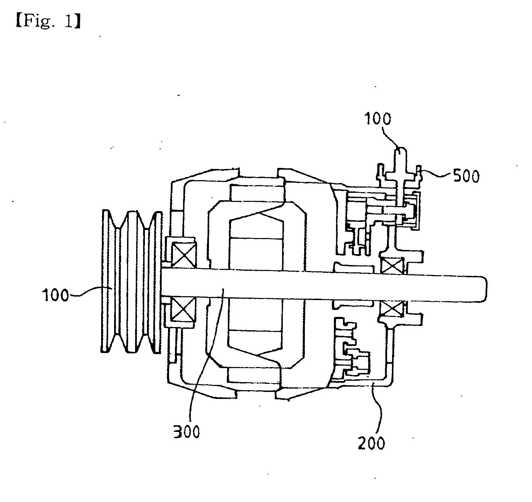

Figure 1 is a front view illustrating a vehicle alternator according to the present invention, and Figure 2 is a partial cross-sectional view illustrating a terminal assembling structure according to the present invention. As shown therein, in the present invention, a vehicle alternator is constructed in such a manner that a radial shape output terminal 400 is directly contacted with a heat sink 700, which is protruded in an outer direction of the bracket, by a fixing bolt 600 in a state that the radial shape output terminal 400, which is in a straight line shape in general, is surrounded by an insulation member 500 in a vertical direction with respect to a direction of a shaft 300 in a lateral side of a housing 200 which is engaged to the side opposite to the portion in which a pulley 100 is installed and supports bearings.

The radial shape output terminal 400 includes a contact portion 410 formed in a portion fixed by the fixing bolt 600, a circular protrusion 420 which is extended from the contact portion 410 and is surrounded in a connector connection portion 510 of the insulation member 500 by a certain depth, and a circular terminal portion 430 outwardly extended from the center of the circular protrusion 420 by a certain length.

In the drawings, reference numeral 800 represents a rotor which is rotated in synchronization with the shaft 300, and 900 represents a stator.

Therefore, when the current is supplied from the heat sink 700 to the terminal portion of the radial shape output terminal, the power is stably supplied without a short circuit with the housing 200 by the insulation member 500.

In addition, since the axial directions of the contact portion 410, the circular protrusion 420 and the terminal portion 430 of the radial shape output terminal 400 are on the straight line, a lot assembling space is not needed in the rear portion of the housing 200.

As described above, the assembling space is significantly decreased in such a manner that the terminal is protruded in a circumferential direction of the housing when assembling the terminal. In addition, since the axial directions of the contact portion, the circular protrusion and the terminal portion of the terminal are on the straight line, it is possible to implement an easier fabrication.

In the present invention, the contact area with the heat sink is increased in such a manner that the radial shape output terminal, which is in a straight line shape in general, is directly contacted with and fixed to the heat sink in a state that the radial shape output terminal is surrounded by the insulation member in a vertical direction with respect to the axial direction in an outer side of the housing which supports the bearings. Therefore, it is possible to implement an effective heat radiation for thereby preventing a loosening state in the contact portions of the elements based on the above effective heat radiation. As the contact area is increased, even when a vibration or impact occurs during the operation of the vehicle, the contact portions of the elements are not disconnected. The electric power generated by the alternator is stably supplied to the vehicle and battery.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a vehicle alternator including a housing which supports bearings for a rotation of a shaft, and a rectifier is installed in the housing,
a terminal for a vehicle alternator in which a heat sink is installed in the housing for radiating heat generated in the rectifier, and a part of the heat sink is protruded to the outside of the housing, so that the protruded portion of the heat sink is directly contacted with a radial shape output terminal.

2. The terminal of claim 1, wherein said radial shape output terminal is formed of an insulation member, a protrusion portion formed of an insulation member is formed in a surrounding portion of the contact portions of the radial shape output terminal member contacting with the heat, and the protrusion is inserted between the housing and the heat sink for thereby preventing a rotation of the radial shape output terminal.

3. The terminal of claim 1, wherein said heat sink is outwardly protruded to the outside of the housing, and the rotation of the radial shape terminal member is prevented by the protruded portion.
